# EUROPEAN PATENT APPLICATION

(11) **EP 4 284 069 A1**
(43) Date of publication of application: **29.11.2023**
(21) Application number: 23174693.4
(22) Date of filing: 23.05.2023
(51) Int. Cl.: H04W 48/12, H04W 24/02

(54) **TRANSMISSION OF CCA USAGE IN NEIGHBORING CELLS**

(30) Priority: 25.05.2022 GB 202207694
(71) Applicant: Nokia Technologies Oy, 02610 Espoo (FI)
(72) Inventor: PORTELA LOPES DE ALMEIDA, Erika, Aalborg (DK); CAUDURO DIAS DE PAIVA, Rafael, Aalborg (DK); LUNTTILA, Timo Erkki, Espoo (FI)
(74) Representative: Nokia EPO representatives

(57) **Abstract**

An apparatus comprises: means for identifying, at a serving base station, a clear channel assessment operation status for at least one neighbouring cell; and means for transmitting an indication of the clear channel assessment operation status for the at least one neighbouring cell to a served user equipment.

## Description

### TECHNOLOGICAL FIELD

Various example embodiments relate to apparatus and methods for determining a clear channel assessment operation status.

### BACKGROUND

In wireless telecommunications networks, such those implementing 5th generation new radio (5G NR) and other similar networks, techniques exist, such as clear channel assessment or listen before talk, where a network node, such as a base station or user equipment, determine whether other transmissions are occurring prior to commencing transmissions themselves to reduce the likelihood to collisions occurring on shared resources. Although the use of clear channel assessment can assist in reducing collisions, unexpected consequences can occur. Accordingly, it is desired to provide an improved technique for clear channel assessment.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to various, but not necessarily all, example embodiments of the invention there is provided an apparatus, comprising: means for identifying, at a serving base station, a clear channel assessment operation status for at least one neighbouring cell; and means for transmitting an indication of the clear channel assessment operation status for the at least one neighbouring cell to a served user equipment.

The indication may identify whether the at least one neighbouring cell operates with clear channel assessment or not.

The indication may be encoded in a VarMeasConfig variable of a message.

The indication may be encoded in a field associated with that neighbouring cell.

The indication may be encoded in a MeasObjectNR field associated with that neighbouring cell.

The indication may be encoded in one of: a list identifying neighbouring cells operating with clear channel assessment and another list identifying neighbouring cells not operating with clear channel assessment.

The clear channel assessment list may comprise a MeasObjectListCCA and the non-clear channel assessment list comprises a MeasObjectList.

The indication may be encoded in a SIB1.

The indication may identify one of whether: a serving cell supported by the serving base station operates with clear channel assessment or not; and a network containing the at least one neighbouring cell operates with clear channel assessment.

The indication may identify that the network operates with clear channel assessment when at least one neighbouring cell operates with clear channel assessment.

The apparatus may comprise: means for instructing the served user equipment to report whether neighbouring cells are configured to operate with clear channel assessment.

The means for instructing may instruct the served user equipment to report whether neighbouring cells are configured to operate with clear channel assessment by determining whether ChannelAccessMode2 is enabled for those neighbouring cells.

The apparatus may comprise a base station.

According to various, but not necessarily all, example embodiments of the invention there is provided a method, comprising: identifying, at a serving base station, a clear channel assessment operation status for at least one neighbouring cell; and transmitting an indication of the clear channel assessment operation status for the at least one neighbouring cell to a served user equipment.

The indication may identify whether the at least one neighbouring cell operates with clear channel assessment or not.

The indication may be encoded in a VarMeasConfig variable of a message.

The indication may be encoded in a field associated with that neighbouring cell.

The indication may be encoded in a MeasObjectNR field associated with that neighbouring cell.

The indication may be encoded in one of: a list identifying neighbouring cells operating with clear channel assessment and another list identifying neighbouring cells not operating with clear channel assessment.

The clear channel assessment list may comprise a MeasObjectListCCA and the non-clear channel assessment list comprises a MeasObjectList.

The indication may be encoded in a SIB1.

The indication may identify one of whether: a serving cell supported by the serving base station operates with clear channel assessment or not; and a network containing the at least one neighbouring cell operates with clear channel assessment.

The indication may identify that the network operates with clear channel assessment when at least one neighbouring cell operates with clear channel assessment.

The method may comprise: instructing the served user equipment to report whether neighbouring cells are configured to operate with clear channel assessment.

The instructing may comprise instructing the served user equipment to report whether neighbouring cells are configured to operate with clear channel assessment by determining whether ChannelAccessMode2 is enabled for those neighbouring cells.

According to various, but not necessarily all, example embodiments of the invention there is provided an apparatus, comprising: means for receiving, at a user equipment, an indication of a clear channel assessment operation status for the at least one neighbouring cell from a serving base station.

The indication may identify whether the at least one neighbouring cell operates with clear channel assessment or not.

The indication may be encoded in a VarMeasConfig variable of a message.

The indication may be encoded in a field associated with that neighbouring cell.

The indication may be encoded in a MeasObjectNR field associated with that neighbouring cell.

The indication may be encoded in one of: a list identifying neighbouring cells operating with clear channel assessment; and another list identifying neighbouring cells not operating with clear channel assessment.

The clear channel assessment list may comprise a MeasObjectListCCA and the non-clear channel assessment list comprises a MeasObjectList.

The indication may be encoded in a SIB1.

The indication may identify one of whether: a serving cell supported by the serving base station operates with clear channel assessment or not; and a network containing the at least one neighbouring cell operates with clear channel assessment.

The indication may identify that the network operates with clear channel assessment when at least one neighbouring cell operates with clear channel assessment.

The apparatus may comprise: means for discarding measurement samples when the indication identifies that the network operates with clear channel assessment.

The apparatus may comprise: means for adjusting a neighbouring cell measurement period in response to at least one clear channel assessment failure.

The apparatus may comprise: means for adopting a fixed neighbouring cell measurement period when the indication identifies that the at least one neighbouring cell does not operate with clear channel assessment.

The apparatus may comprise: means for extending the neighbouring cell measurement period when the indication identifies that the at least one neighbouring cell operates with clear channel assessment.

The apparatus may comprise: means for extending the neighbouring cell measurement period when the indication identifies that the at least one neighbouring cell operates with clear channel assessment and when the at least one neighbouring cell is subject to at least one clear channel assessment failure.

The apparatus may comprise: means for receiving an instruction from the serving base station to report whether neighbouring base stations are configured to operate with clear channel assessment.

The instruction may instruct the user equipment to report whether neighbouring base stations are configured to operate with clear channel assessment by reading SIB1.

The instruction may instruct the user equipment to report whether neighbouring base stations are configured to operate with clear channel assessment by determining whether ChannelAccessMode2 is enabled for those neighbouring base stations.

The apparatus may comprise a user equipment.

According to various, but not necessarily all, example embodiments of the invention there is provided a method, comprising: receiving, at a user equipment, an indication of a clear channel assessment operation status for the at least one neighbouring cell from a serving base station.

The indication may identify whether the at least one neighbouring cell operates with clear channel assessment or not.

The indication may be encoded in a VarMeasConfig variable of a message.

The indication may be encoded in a field associated with that neighbouring cell.

The indication may be encoded in a MeasObjectNR field associated with that neighbouring cell.

The indication may be encoded in one of: a list identifying neighbouring cells operating with clear channel assessment; and another list identifying neighbouring cells not operating with clear channel assessment.

The clear channel assessment list may comprise a MeasObjectListCCA and the non-clear channel assessment list comprises a MeasObjectList.

The indication may be encoded in a SIB1.

The indication may identify one of whether: a serving cell supported by the serving base station operates with clear channel assessment or not; and a network containing the at least one neighbouring cell operates with clear channel assessment.

The indication may identify that the network operates with clear channel assessment when at least one neighbouring cell operates with clear channel assessment.

The method may comprise: discarding measurement samples when the indication identifies that the network operates with clear channel assessment.

The method may comprise: adjusting a neighbouring cell measurement period in response to at least one clear channel assessment failure.

The method may comprise: adopting a fixed neighbouring cell measurement period when the indication identifies that the at least one neighbouring cell does not operate with clear channel assessment.

The method may comprise: extending the neighbouring cell measurement period when the indication identifies that the at least one neighbouring cell operates with clear channel assessment.

The method may comprise: extending the neighbouring cell measurement period when the indication identifies that the at least one neighbouring cell operates with clear channel assessment and when the at least one neighbouring cell is subject to at least one clear channel assessment failure.

The method may comprise: receiving an instruction from the serving base station to report whether neighbouring base stations are configured to operate with clear channel assessment.

The instruction may instruct the user equipment to report whether neighbouring base stations are configured to operate with clear channel assessment by reading SIB1.

The instruction may instruct the user equipment to report whether neighbouring base stations are configured to operate with clear channel assessment by determining whether ChannelAccessMode2 is enabled for those neighbouring base stations.

According to various, but not necessarily all, example embodiments of the invention there is provided an apparatus, comprising: at least one processor; and at least one memory including computer program code; the at least one memory and the computer program code configured to, with the at least one processor, cause the apparatus at least to perform: either method and their optional steps set out above.

According to various, but not necessarily all, example embodiments of the invention there is provided either apparatus and their optional features as set out above wherein the means comprise: at least one processor; and at least one memory storing instructions that, when executed by the at least one processor, cause the performance of the apparatus.

According to various, but not necessarily all, example embodiments of the invention there is provided a computer program operable, when executed on a computer, to perform either method and their optional steps set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates a situation where neighbouring cells both use and do not use clear channel assessment;
FIG. 2 is a timing diagram showing how a measurement object can be used to signal which neighbour cells are using clear channel assessment or not;
FIG. 3 is a timing diagram showing how different measurement object lists can be used to signal to the user equipment a list of measurement objects without clear channel assessment and a list of measurement objects with clear channel assessment;
FIG. 4 is a timing diagram showing how SIB1 can be used to indicate clear channel assessment is used in the network; and
FIG 5 is a timing diagram illustrating a method for user equipment reporting of clear channel assessment from neighbours.

### DETAILED DESCRIPTION

Before discussing the example embodiments in any more detail, first an overview will be provided. Some example embodiments provide a technique whereby a serving cell reports whether or not neighbouring cells use clear channel assessment. This can be used by a user equipment to adjust measurement times when cells are configured to use clear channel assessment. In particular, the user equipment can avoid increasing measurement times that would otherwise be required for clear channel assessment if it is determined that clear channel assessment is not being used. The reports are typically encoded in messaging between the serving base station and the user equipment. In one approach, the measurement object for each cell is annotated to include an indication of whether that cell uses clear channel assessment or not. In another approach, two lists are provided, one of which lists the cells that use clear channel assessment and another of which lists the cells that do not use clear channel assessment. Alternatively, a message can be provided from the serving base station of whether or not any clear channel assessment is used within its network. The user equipment can be instructed to monitor the transmissions of neighbour cells and report to the serving base station whether those cells use clear channel assessment or not. These approaches provide an efficient technique for determining whether cells use clear channel assessment or not.

By way of background, in the work item NR_ext_to_71GHz, two channel access modes are specified: operation with clear channel assessment (CCA) and operation without CCA (also known as a listen-before-talk (LBT) procedure). When CCA is applied, a serving base station (gNB) or a user equipment (UE) needs to perform energy sensing on the channel prior to a transmission. If the sensed energy is below a predefined threshold, then a transmission may happen; otherwise the transmission is postponed.

In the 60 GHz spectrum, CCA prior to a transmission is mandatory in some regions and optional in other regions. Furthermore, even in a single region such as Europe, the need for CCA may depend on the deployment (e.g. type of equipment), as the European Telecommunications Standards Institute (ETSI) has developed multiple harmonized standards, some of which mandate the use of LBT, while others do not. Contrary to Rel-16 NR-U in FR1, the UE cannot assume that all cells in FR2-2 use channel access based on CCA. Some operators might choose to operate with CCA in regions where it is not mandatory because this would create a better coexistence with WiFi networks deployed in the same area.

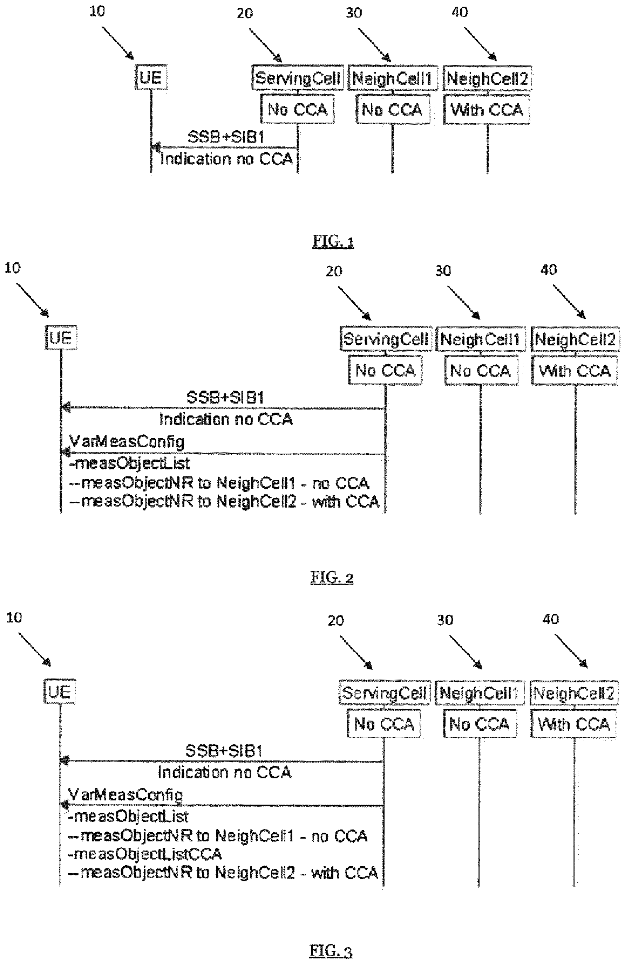

From the UE point of view, this creates a problem, because it does not know which cells use CCA and which cells do not. RAN 1 is currently discussing introducing signalling for the serving cell to indicate to the UEs that the serving cell is using CCA and which kind of CCA is used. However, it is not precluded for a network to configure different cells with and without CCA, and as a result the UE does not know which access mode is used by the neighbour cells. FIG. 1 shows one example of a deployment where this problem would be observed. In this example, the serving cell (ServingCell) 20 supported by a serving base station is configured without CCA, and there is a neighbour cell (NeighCell1) 30 without CCA as well. However another neighbour cell (NeighCell2) 40 is using CCA. In this example, the serving cell signals the UE 10 with SIB1 that it is using CCA, as it is being currently discussed in RAN1. However, this indication is not enough for the UE 10 to evaluate the configuration of the neighbour cells.

The decision on the type of access mode is important for defining the UE behaviour when performing measurements. RAN4 has defined different requirements for operation with CCA and without CCA in TS 38.133. For operation with CCA, as in NR-U, RAN4 has extended the neighbour cell measurement periods according to the number of CCA failures observed during the measurement period. In lower signal to interference and noise ratio (SINR) situations, the UEs cannot determine whether the Synchronization Signal Block (SSB) was not received due to for example deep fading or if it was not transmitted at all due to CCA failures. As a result, when measuring cells with CCA, the UE 10 is allowed additional relaxation on how long the measurements may take place in comparison to measurements in cells that do not configure CCA. There are also different UE behaviours specified when the UE measures neighbours that operate with CCA, and when it measures neighbours that operate without CCA.

One approach that has been proposed in RAN4 is that the UEs would always assume that CCA is used by neighbour cells while operating in an unlicensed band. However, if the UE 10 always assumes that CCA is used in FR2-2, as proposed by some in RAN4 #103 (R4-2208948), it might end up discarding samples that should have been considered for neighbour cell measurements - which will lead to overestimating neighbour cell measurements, and delaying the measurement reports.

Currently, RAN1 has agreed to introduce signalling for whether or not CCA is used in the serving cell by the gNB, using the radio resource control (RRC) parameter below defined in TS 38.331.

### channelAccessMode2

*If present ('enabled'), this field indicates that the UE shall apply channel access mode procedures for operation with shared spectrum channel access in accordance with TS 37.213 [48], clause 4.4 for FR2-2. If absent, the UE shall not apply any channel access procedure.*

However, this indication is valid only for the serving cell. There is no discussion on signalling of the CCA type used by neighbour cells. Although the UE 10 can in some cases read the SIB1 of neighbour cells to determine whether the neighbours are using CCA or not, this can add considerable delay to the measurements.

Additionally, RAN1 has agreed that even if parameter channelAccessMode2 is not enabled, when the regulations allow, CCA or LBT is not always required for the transmission of discovery bursts (that contain e.g. SSBs). This is captured in TS 37.213:

### 4.4.5 Exempted transmissions from sensing

*In regions where channel sensing is required to access a channel for transmission and short control signalling exemption is allowed by regulation, a gNB*/*UE may transmit the following transmission(s) on a channel without sensing the channel:*
- *Transmission(s) of the discovery burst by the gNB*
- *Transmission(s) of the first message in a random access procedure by the UE*

*When the gNB*/*UE transmits the above transmission(s) without sensing on a channel by utilizing the exemption above, the total duration of such transmission(s) by the gNB*/*UE shall not occupy the corresponding channel more than 10ms over any 100ms interval.*

In RAN4, there is also a discussion about considering that CCAis always used by neighbour cells - disregarding the region, or whether the UE 10 can assume that the same channel access mechanism used by the serving cell is also used by the neighbour cells but no consensus was reached on this issue.

### Overview Of Methods

Some example embodiments use different methods to enable the UE to determine whether a given neighbour is using CCA or not using CCA.
1. A first method is based on the assumption that the network knows which cells are using CCA and which cells are not using CCA prior to transmission signals that are used for measurements (e.g. discovery bursts). In this case, the serving cell will give this information to the UE 10 in the configuration of the measurement object.
   In one approach, the measurementObjectNR contains information about the SSBs or Channel State Information Reference Signal (CSI-RS) to be measured in the intra-frequency and inter-frequency measurements as well as a list of cells. When adding a cell to the measurement object, the gNB includes the following information:
      - This cell uses CCAprior to transmitting the signals that are measured;
      - This cell does not use CCAprior to transmitting the signals that are measured (i.e. channelAccessMode2 is absent, or the measured signals are exempted from sensing as defined in Clause 4.4.5 of TS 37.213).
   Another approach is to create a different list of measurement objects with LBT. In that case, one list of measurement objects would not include CCA while another list would include CCA. This approach can lead to reduced signalling, since no additional flag has to be included for each measurement object.
2. A second method is that the gNB broadcasts in SIB1 whether this network uses CCA or does not use CCA. Since CCA is a region-specific regulatory requirement, it can be that some operators choose not to deploy networks with CCA at all. So if the UE 10 reads this information in SIB1, it will assume that no neighbours use CCA. The gNB can broadcast different information, such as:
   1) This cell does not use CCA prior to transmission of discovery bursts;
   2) This network does not use CCA prior to transmission of discovery bursts;
   3) This network uses CCA prior to transmission of discovery bursts.

Note that the indication 1) may not be the same as channelAccessMode2, since it can also consider whether discovery bursts are transmitted without CCA or not (i.e. are exempted from sensing). If the UE 10 gets the information in 2) or 3) it can apply this assumption to all cells in the network, when performing RRC measurements (i.e. in the case of 3), the UE 10 may adjust (for example prolong) the measurement period, where it appears that the measured signals were not transmitted because gNB could not access the channel).

Considering that the bands currently defined in FR2-2 are unlicensed, the deployments might be uncoordinated. In this case, the gNB might not have the information about whether the neighbours use channel access based on CCA or not. One option for the gNB to gather information about the neighbour cells would be to configure the UEs to report back to the gNB whether the neighbours use CCA or not, by indicating whether channelAccessMode2 is enabled or not in each cell. This would be similar to the concept of Automatic Neighbour Relation (ANR), in which the serving cell 20 configures the UE 10 to measure the neighbours and report back. So the UE 10 would measure the neighbours, read the information in SIB1 as in the second method, and report back to the network or gNB. The network or gNB would then use this information and configure for example, the measurement objects accordingly to other UEs, as in the first method.

### First Method - Detail

A detailed description of how to implement the first method is illustrated in FIG. 2 and FIG. 3. In this method, the indication of the CCA configuration is performed while the gNB is configuring measurement objects for the UE 10, where the additional information of the CCA is included. In both cases, the UE 10 has full information about which cells it should be considering measurement requirements with and without CCA, and the UE is able to interpret SSBs not available to determine if measurement times should be extended or not.

As illustrated in FIG. 2, in one approach, the information on the CCA is included in the MeasObjectNR, which may include one or more cells to be added. In this example, two measurement objects are included, one with the flag isCCA_configured disabled for the measurement object including NeighCell1 30, and the other with the flag isCCA_configured enabled for the measurement object including NeighCell2 40. One example on how to change MeasObjectNR in 38.331 to include such flag is shown below:

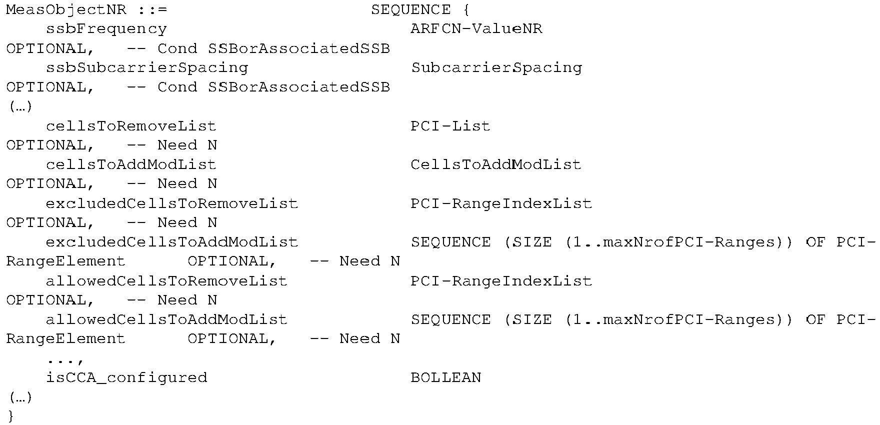

FIG. 3 shows another approach where the list of measurement objects is dedicated for objects with CCA. In this example, the gNB sends VarMeasConfig with a list of objects without CCA that include NeighCell1 30, and a list of objects with CCA that includes NeighCell2 40.

When the approach in FIG. 3 is considered, one additional field would be included in VarMeasConfig as illustrated below. This new field can be called measObjectListCCA or similar, and would include the list of measurement objects which have CCA configured. An advantage of including this information as a separate list is that less signalling would be required. If measObjectNR is sent for a list of measurement objects, including additional fields in there would imply replication of this field for the whole list. This doesn't happen with this approach of having one list for objects with CCA and another list for objects without CCA.

### VarMeasConfig UE variable

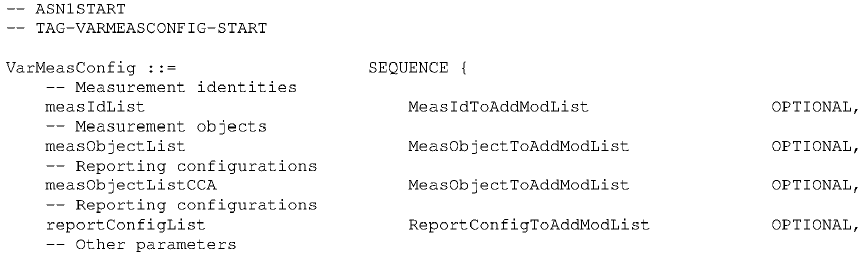

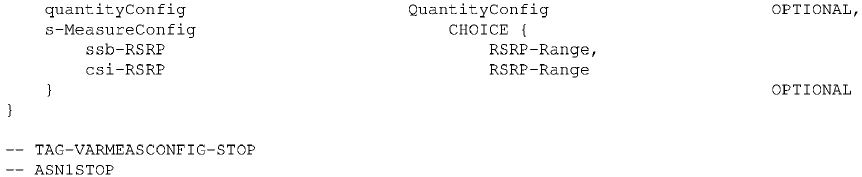

### Second Method - Detail

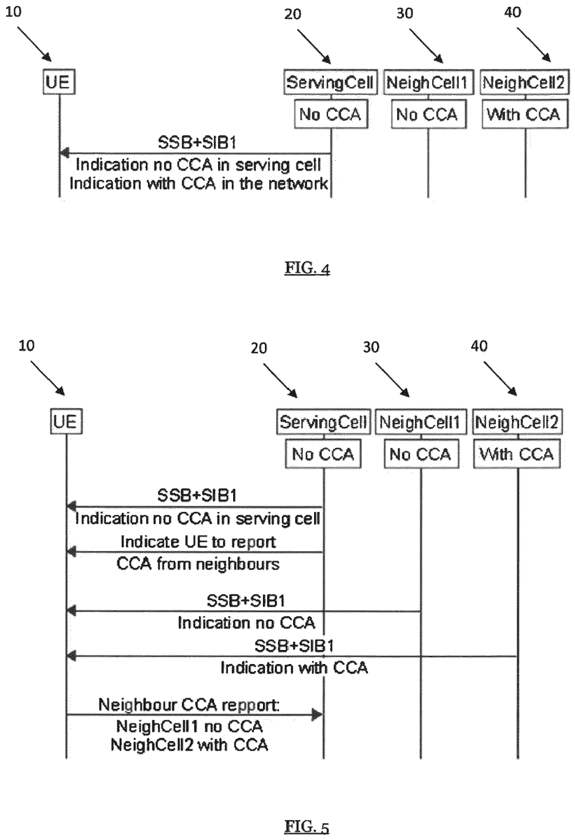

FIG. 4 shows a time diagram illustrating method 2, where SIB1 is used to indicate the CCA configuration of the serving cell 20 and of the network. In this case, the gNB indicates that no CCA is configured in the serving cell 20, but as there is at least one neighbour cell using CCA it indicates that the network is configured with CCA. In this case, if all the cells are not configured with CCA, then the gNB would indicate that the network is not configured with CCA, and the UE 10 could use smaller measurement times when performing Radio Resource Management (RRM)
procedures/ measurements. This method has the advantage of having simplified signalling in comparison to the other methods set out above. On the other hand, the other methods provide more flexibility in signalling to the UE 10 different mixes of cells with and without CCA.

Additionally, considering that this approach is typically intended for use in unlicensed bands, more than one network may be using the same frequency resources. Therefore, the serving cell 20 may configure the UE 10 to report the CCA configuration of neighbour cells, so that it can use this information for configuring measurement objects of other UEs. This can be useful in the case that the gNB would like to discover the CCA configuration. In FIG. 5 one example is shown where the serving cell 20 configures the UE 10 to monitor neighbour cells' CCA configuration. In this case, the UE 10 would need to decode SIB1 from the neighbour cells to determine if a CCA indication is present or not. Finally, the UE 10 makes a neighbour cell CCA report, indicating that the NeighCell1 30 doesn't have CCA and that the NeighCell2 40 is configured with CCA.

The typical operation of the UE 10 can by summarized as follows:
Step 1: The UE 10 receives an indication from the gNB on whether CCA is done prior to the signals that are used for measurement. This may involve:
   - receiving separate measurement objects for cells where CCA is done, and CCA is not done, respectively (the first method);
   - alternatively or additionally, the UE 10 may receive an indication via e.g. SIB1 on whether CCA is used in the measured cells or not (second method).
Step 2: depending on whether CCA is applied in the measured cells or not, adjusting the neighbour cell measurement periods.

In another approach, in case the UE 10 does not receive the information in Step 1, the UE 10 may alternatively determine on its own, whether CCA is done in the neighbouring cells.

When compared to existing approaches, some example embodiments enable UEs to obtain accurate information of which cells are using CCA or not when performing RRM procedures and measurements. From the network perspective, this avoids an unnecessary extension of RRM procedures timings, for example, handover can be performed in a shorted time if the UE 10 knows that the target cell is not using CCA. From the UE 10 perspective, if the UE 10 doesn't know if a cell is using CCA, then it cannot distinguish between a SSB not received because of deep fading or because of a CCA failure. In that sense, the UE 10 can avoid wasting power doing additional measurements that are not required in cells that do not configure CCA.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
means for identifying, at a serving base station, a clear channel assessment operation status for at least one neighbouring cell; and
means for transmitting an indication of said clear channel assessment operation status for said at least one neighbouring cell to a served user equipment,
wherein said indication identifies whether said at least one neighbouring cell operates with clear channel assessment or not;
means for instructing said served user equipment to report whether neighbouring cells are configured to operate with clear channel assessment.

2. The apparatus of claim 1, wherein said indication is encoded in at least one of:
a VarMeasConfig variable of a message;
a field associated with that neighbouring cell;
a MeasObjectNR field associated with that neighbouring cell; and
a SIB1.

3. The apparatus of any preceding claim, wherein said indication is encoded in one of:
a list identifying neighbouring cells operating with clear channel assessment and
another list identifying neighbouring cells not operating with clear channel assessment, wherein said list comprises a MeasObjectListCCA and said another list comprises a MeasObjectList.

4. The apparatus of any preceding claim, wherein said indication identifies one of whether:
a serving cell supported by said serving base station operates with clear channel assessment or not; and
a network containing said at least one neighbouring cell operates with clear channel assessment or not.

5. The apparatus of claim 4, wherein said indication identifies that said network operates with clear channel assessment when at least one neighbouring cell operates with clear channel assessment.

6. An apparatus, comprising:
means for receiving, at a user equipment, an indication of a clear channel assessment operation status for said at least one neighbouring cell from a serving base station,
wherein said indication identifies whether said at least one neighbouring cell operates with clear channel assessment or not;
means for adjusting a neighbouring cell measurement period based on the indication.

7. The apparatus of claim 6, wherein said indication is encoded in at least one of:
a VarMeasConfig variable of a message;
a field associated with that neighbouring cell;
a MeasObjectNR field associated with that neighbouring cell; and
a SIB1.

8. The apparatus of any one of claims 6 or 7, wherein said indication is encoded in one of:
a list identifying neighbouring cells operating with clear channel assessment; and
another list identifying neighbouring cells not operating with clear channel assessment, wherein said list comprises a MeasObjectListCCA and said another list comprises a MeasObjectLis.

9. The apparatus of any one of claims 6 to 8, wherein said indication identifies one of whether:
a serving cell supported by said serving base station operates with clear channel assessment or not; and
a network containing said at least one neighbouring cell operates with clear channel assessment.

10. The apparatus of claim 9, wherein said indication identifies that said network operates with clear channel assessment when at least one neighbouring cell operates with clear channel assessment.

11. The apparatus of any one of claims 6 to 10, further comprising:
means for adopting a fixed neighbouring cell measurement period when said indication identifies that said at least one neighbouring cell does not operate with clear channel assessment.

12. The apparatus of any one of claims 6 to 11, further comprising:
means for extending said neighbouring cell measurement period when said indication identifies that said at least one neighbouring cell operates with clear channel assessment.

13. The apparatus of any one of claims 6 to 12, further comprising:
means for extending said neighbouring cell measurement period when said indication identifies that said at least one neighbouring cell operates with clear channel assessment and when said at least one neighbouring cell is subject to at least one clear channel assessment failure.

14. A method, comprising:
receiving, at a user equipment, an indication of a clear channel assessment operation status for said at least one neighbouring cell from a serving base station,
wherein said indication identifies whether said at least one neighbouring cell operates with clear channel assessment or not;
adjusting a neighbouring cell measurement period based on the indication.

15. The method of claim 14, wherein said indication is encoded in at least one of:
a VarMeasConfig variable of a message;
a field associated with that neighbouring cell;
a MeasObjectNR field associated with that neighbouring cell; and
a SIB1.
